# EUROPÄISCHE PATENTSCHRIFT

(11) **EP 0 861 379 B1**
(45) Veröffentlichungstag und Bekanntmachung des Hinweises auf die Patenterteilung: **30.06.1999**
(21) Anmeldenummer: 96937254.9
(22) Anmeldetag: 25.10.1996
(51) Int. Cl.: F16B 33/00, F16B 25/10

(54) **SCHRAUBE UND VERFAHREN ZU IHRER HERSTELLUNG**
SCREW AND METHOD OF PRODUCING THE SAME
VIS ET SON PROCEDE DE PRODUCTION

(30) Priorität: 30.10.1995 DE 19540848
(43) Veröffentlichungstag der Anmeldung: 02.09.1998
(73) Patentinhaber: Ludwig Hettich & Co., 78713 Schramberg-Sulgen (DE)
(72) Erfinder: HETTICH, Ulrich, D-78713 Schramberg (DE)
(74) Vertreter: Liesegang, Eva
(86) Internationale Anmeldenummer: EP9604668
(87) Internationale Veröffentlichungsnummer: WO9716652

(56) Entgegenhaltungen:
- WO-A-88/05991
- WO-A-95/09930
- GB-A- 1 552 363
- US-A- 3 924 508
- US-A- 4 233 880
- US-A- 4 295 351
- US-A- 4 736 481
- PATENT ABSTRACTS OF JAPAN vol. 017, no. 077 (M-1367), 16.Februar 1993 & JP 04 277309 A (KOKUBU KAGAKU KOUGIYOU KK), 2.Oktober 1992,

## Beschreibung

Die Erfindung betrifft eine Schraube aus rostfreiem Stahl mit harter Spitze, sowie ein Verfahren zu ihrer Herstellung.

Mit den Fortschritten auf dem Gebiet des Korrosionsschutzes von Stahlblechen haben sich die Anforderungen an die Korrosionsbeständigkeit von Schrauben erhöht. An Schrauben, die im Außenbereich eingesetzt werden und starken Witterungseinflüssen und/oder Feuchtigkeit ausgesetzt sind, werden hohe Anforderungen bezüglich der Korrosionsbeständigkeit gestellt. Bei selbstbohrenden und/oder selbstschneidenden Schrauben stieß man dabei auf das Problem, daß die auf dem Gebiet der Schraubenherstellung bekannten rostfreien Stähle, z.B. V2A- oder V4A-Stahl, nicht die für eine selbstbohrende bzw. selbstschneidende Schraubenspitze erforderliche Härte aufwiesen.

Es ist eine Schraube bekannt, die einen ersten Schaftabschnitt aus austenitischem rostfreiem Stahl aufweist, der mit dem Schraubenkopf einstückig ist und an seinem freien Ende mit einem zweiten gehärteten Schaftabschnitt aus einem aufgekohlten Stahl verschweißt ist, dessen freies Ende oder Spitze einen Bohrabschnitt bildet (DE 43 10 938 A1). Bei der bekannten Schraube sind jeweils zwei Materialien mit deutlich unterschiedlicher Korrosionsbeständigkeit verbunden. Dementsprechend kann diese Schraube die hohen Anforderungen an die Korrosionsbeständigkeit nur unzureichend erfüllen.

Aus der WO 88/05991 ist bei einer zweiteiligen Schraube bekannt, die einen Bohrabschnitt bildende Spitze der Schraube aus martensitischem Stahl herzustellen, wobei jedoch zum Kohlenstoffgehalt der Spitze nichts ausgesagt ist und lediglich auf das Problem hingewiesen ist, eine erhöhte Härte der Spitze zu erzielen, nicht aber auf ein Korrosionsproblem.

Aus der US-A-3,924,508 ist eine zweiteilige, selbstbohrende Schraube mit korrosionsbeständigem Kopfteil und gehärtetem Kopfteil aus einem Kohlenstoffstahl bekannt.

Ferner ist aus der US-A-4,233,880 eine einteilige Schraube aus einem korrosionsfesten Stahl bekannt, bei der eine harte Martensitstruktur der Spitze durch ein besonderes Schmiedeverfahren erzielt wird.

Schließlich ist eine Schraube aus austenitischem rostfreiem Stahl bekannt (EP 0 523 298 B1), deren Schaft durch Nitrieren gehärtet und zum Korrosionsschutz mit einem vor Korrosion schützenden Metall- oder Kunststoffüberzug versehen wird. Dieser schützende Überzug ist erforderlich, weil die Korrosionsbeständigkeit des austenitischen Stahls durch die Nitrierschicht stark beeinträchtigt wird.

Es ist Aufgabe der Erfindung, eine mehrteilige Schraube mit harter Spitze zu schaffen, welche eine möglichst gleich hohe Korrosionsbeständigkeit im harten Spitzenabschnitt wie in den übrigen Teilen der Schraube aufweist. Ferner soll mit der Erfindung ein einfaches Herstellverfahren für eine solche Schraube angegeben werden.

Diese Aufgaben werden mit einer Schraube nach Anspruch 1 und einem Verfahren nach Anspruch 5 gelöst.

Erfindungsgemäß werden zwei Materialien mit in etwa gleich guter Korrosionsbeständigkeit, aber unterschiedlicher Härte verwendet, wobei das weichere Material für denjenigen Bereich der Schraube verwendet wird, in dem der Umformungsgrad groß ist, nämlich für ersten Schaftabschnitt umfassend den Kopf der Schraube, während das härtere Material mit einem Kohlenstoffgehalt von weniger als 0,01 % für denjenigen Bereich der Schraube verwendet wird, in dem der Umformungsgrad geringer, die erforderliche Härte jedoch größer ist, nämlich den zweiten Schaftabschnitt umfassend die Spitze der Schraube. Dadurch kann die Spitze wesentlich härter ausgelegt werden, als wenn die Schraube insgesamt aus einem einzigen Material gefertigt würde.

Das Material des zweiten Schaftabschnittes ist ausreichend duktil, um durch Kaltumformung eine Bohrspitze und/oder ein Gewinde herzustellen. Nach dem Auslagerungs-Härteprozess erreicht das Material bei ungeminderter Korrosionsbeständigkeit eine ausreichend hohe Gebrauchshärte.

Als für die Zwecke der Erfindung besonders geeignet hat sich zur Herstellung des zweiten Schaftabschnittes eine an sich bekannte Legierung gemäß Anspruch 3, insbesondere gemäß Anspruch 4, herausgestellt.

Das erfindungsgemäße Verfahren erfordert nur eine relativ geringe Auslagerungstemperatur, vorzugsweise ca. 475°C. Damit kann im Spitzenbereich der Schraube die für die Funktion der Schraube notwendige Oberflächenhärte von bis zu 720 HV erreicht werden, während die für den Einsatz der Schraube erforderliche Flexibilität des Materials in ausreichendem Maße erhalten bleibt.

Da erfindungsgemäß zwei Materialien verbunden werden, die eine ähnlich gute Korrosionsbeständigkeit aufweisen, treten die vom Stand der Technik her bekannten Nachteile bei der Verbindung von austenitischen Materialien mit kohlenstoffreichen oder aufgekohlten Stählen, z.B. Verspröden der Schweißnaht oder Aufkohlen des austenitischen Schraubenteils bei der Wärmebehandlung, nicht auf. Der mit Gewinde versehene Schaftbereich ist über seine gesamte Länge korrosionsbeständig. Aufwendiges Nacharbeiten, wie die Bearbeitung der Schweißnaht vor dem Gewindewalzen oder die Oberflächenbehandlung der angeschweißten Spitze, entfallen.

Durch die Anwendung der erfindungsgemäßen Werkstoffkombination wird weiterhin erreicht, daß die - vorzugsweise durch Widerstandspreßschweißen - gebildete Verbindungsnaht eine homogene, nicht versprödende Aufschmelzzone bildet, die keinerlei Nacharbeit mehr erfordert.

Die Erfindung ist im folgenden anhand eines Ausführungsbeispiels mit Bezug auf die beigefügten Zeichnungen mit weiteren Einzelheiten näher erläutert. Dabei sind die Fig. 1 bis 3 schematische Darstellungen verschiedener Stadien des erfindungsgemäßen Verfahrens. Es zeigen:
- Fig. 1a und 1b: einen ersten Schaftabschnitt und einen zweiten damit zu verschweißenden Schaftabschnitt,
- Fig. 2a und 2b: die Vorgänge des Zusammenfügens und Verschweißens der beiden Schaftabschnitte, und
- Fig. 3: die fertige Schraube.

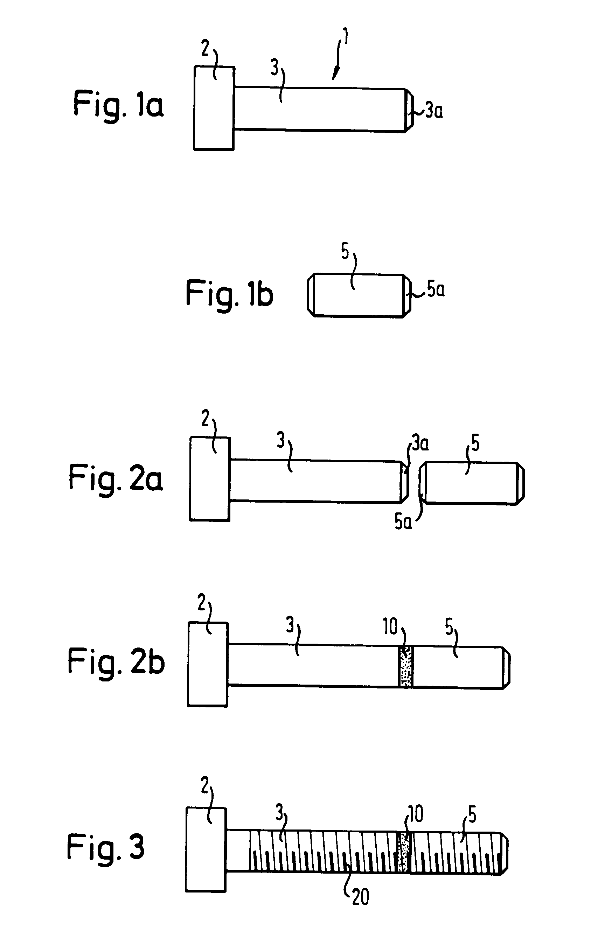

Für die Herstellung einer erfindungsgemäßen Schraube geht man von einem Schraubenrohling 1 aus einem austenitischen rostfreien Stahl, vorzugsweise V2A- oder V4A-Stahl, aus, der schematisch in Fig. la gezeigt ist. Dieser Schraubenrohling hat einen Schaftabschnitt 3 mit einem Kopf 2 am einen Ende und mit einer Stirnfläche 3a am anderen, freien Ende. Ein zweiter Schaftabschnitt 5 in Gestalt eines Rundstabes wird aus einem korrosionsbeständigen martensitisch aushärtbaren Stahl (vgl. Fig. 1b) bereitgestellt, der die Schraubenspitze bilden soll und gleichen Durchmesser wie der erste Schaftabschnitt 3 des Schraubenrohlings sowie ein Ende 5a hat. Als Material für den Rundstab 5 ist ein martensitischer Stahl verwendet, der η-Ni₃Ti-Ausscheidungen im Martensit enthält, die dem Material Festigkeit verleihen. Vorzugsweise enthält ein solcher Stahl etwa 12% Cr und etwa 9% Ni sowie ungefähr 1% Ti, dies bei einem Kohlenstoffgehalt von vorzugsweise unter 0,01%. Der Stahl kann vorteilhafterweise weiterhin noch Molybdän in einem Anteil von etwa 4% enthalten. Besonders gute Ergebnisse wurden mit der Legierung 1XRK91 (V) erzielt, die 0,004% C; 0,05% Si; 0,17% Mn; 0,002% S; 11,7% Cr; 9,1% Ni; 4,1% Mo; 2,0% Cu und 1,0% Ti aufweist. Prozentangaben in der Beschreibung und den Ansprüchen beziehen sich immer auf Gewichtsprozente.

Die beiden zu verschweißenden Enden 3a bzw. 5a werden angefast, um Platz für eine Schweißnaht innerhalb des Schaftdurchmessers zu schaffen, und dann durch Preßschweißen, vorzugsweise durch Widerstandspreßschweißen oder Reibschweißen, miteinander verschweißt. Dabei bildet sich zwischen den beiden Schaftabschnitten 3 und 5 wegen der im Durchmesser reduzierten Schweißnaht eine Aufschmelzzone 10 ohne vorstehenden Schweißgrat, so daß ein Nachbearbeiten der Schweißstelle entfällt.

Danach wird in dem nunmehr aus den beiden unlösbar verbundenen Schaftabschnitten 3 und 5 gebildeten Schaft ein Gewinde gewalzt. Je nach Zweckbestimmung wird das Gewinde in dem austenitischen und/oder martensitischen Schaftabschnitt ausgebildet, wobei insbesondere in dem harten martensitischen Schaftabschnitt ein selbstschneidendes Gewinde hergestellt werden kann, so daß mit der Schraube ein Gewinde im Aufnahmewerkstoff geschnitten werden kann. Das Gewinde der Schraube kann insbesondere so ausgestaltet sein, wie dies in der internationalen Patentanmeldung W094/25763 und der Europäischen Patentanmeldung EP 0 623 759 A2 ausführlich beschrieben ist. Auf diese Druckschriften wird Bezug genommen.

In diesem Herstellungsstadium kann gegebenenfalls auch eine Bohrspitze an dem Schraubenschaft angeschmiedet oder an der Schraubenspitze ausgeformt werden.

Danach wird die Schraube bei ca. 475°C ausgelagert. Dabei erfährt der vordere Schaftabschnitt 5 eine Auslagerungshärtung. Wegen der geringen Auslagerungstemperatur bleibt dabei die Kaltverfestigung des austenitischen Schaftteils 3 im wesentlichen erhalten. Sofern der vordere Schaftabschnitt 5 nach dem Verschweißen keine erhebliche Verformung mehr erfährt, kann die Schraubenspitze 5 auch vor dem Anschweißen wärmebehandelt werden, wodurch die Gefahr einer Verringerung der Kaltverfestigung des austenitischen Schraubenteils 3 vollständig vermieden wird.

Die erfindungsgemäße Schraube findet eine Vielzahl von Anwendungen insbesondere auf dem Gebiet der Bautechnik beispielsweise als dübellose Schraube zum Einschrauben in Mauerwerk oder Beton. Schaft und Gewinde der erfindungsgemäßen Schraube können weitgehend frei gestaltet werden. Der Schaftabschnitt aus austenitischem Stahl kann z.B. verkürzt und im Extremfall auch ganz weggelassen werden, so daß der martensitische Schaftabschnitt 5 direkt an dem Schraubenkopf 2 angeschweißt ist.

## Patentansprüche

1. Schraube aus rostfreiem Stahl mit harter Spitze, deren Schaft einen ersten, den Schraubenkopf aufweisenden Schaftabschnitt (3) aus austenitischem Stahl und einen zweiten, die Schraubenspitze aufweisenden Schaftabschnitt (5) aus martensitaushärtendem Stahl mit einem Kohlenstoffgehalt von weniger als 0,01 % hat, wobei die beiden Schaftabschnitte (3, 5) miteinander verschweißt sind und wobei mindestens der zweite Schaftabschnitt (3, 5) mit einem Gewinde versehen ist.

2. Schraube nach Anspruch 1, dadurch **gekennzeichnet**, daß mindestens die Schraubenspitze bohrend und/oder gewindeschneidend ausgebildet ist.

3. Schraube nach einem der Ansprüche 1 oder 2, dadurch **gekennzeichnet**, daß der martensitaushärtende Stahl ungefähr 12% Cr, 9% Ni, 4% Mo und 1% Ti enthält.

4. Schraube nach Anspruch 3, dadurch **gekennzeichnet**, daß der martensitaushärtende Stahl enthält: 0,004% C; 0,05% Si; 0,17% Mn; 0,002% S; 11,7% Cr; 9,1% Ni; 4,1% Mo; 2,0% Cu; 1,0% Ti.

5. Verfahren zum Herstellen einer Schraube, welches die folgenden Schritte umfaßt:
a) Herstellen eines ersten Schraubenschaftes aus einem austenitischen rostfreien Stahl,
b) Herstellen eines zweiten Schaftabschnitts aus einem martensitaushärtenden rostfreien Stahl mit einem Kohlenstoffgehalt von weniger als 0,01 %,
c) Verschweißen der beiden Schaftabschnitte,
d) Formen eines Gewindes auf mindestens dem zweiten Schaftabschnitt,
e) Härten des zweiten Schaftabschnittes durch Auslagern.

6. Verfahren nach Anspruch 5, **gekennzeichnet** durch Anfasen der zu verschweißenden Enden der beiden Schaftabschnitte, derart, daß beim Verschweißen keine vorstehende Schweißnaht entsteht.

7. Verfahren nach Anspruch 5 oder 6, dadurch **gekennzeichnet**, daß die Schaftabschnitte durch Widerstandspreßschweißen oder durch Reibschweißen verbunden werden.

8. Verfahren nach Anspruch 6 oder 7, **gekennzeichnet** durch Anschmieden einer Bohrspitze an dem zweiten Schaftabschnitt nach dem Verschweißen der beiden Schaftabschnitte.

9. Verfahren nach einem der Ansprüche 6 bis 8, **gekennzeichnet** durch Walzen des Gewindes auf dem zweiten Schaftabschnitt.

10. Verfahren nach einem der Ansprüche 6 bis 9, dadurch **gekennzeichnet**, daß das Auslagerungshärten nach dem Gewindeformen bei ungefähr 475°C durchgeführt wird.

## Claims

1. A stainless steel screw with a hard tip, the shank of which comprises a first shank portion (3) of austenitic steel which has the screwhead, and a second shank portion (5) of maraging steel with a carbon content of less than 0.01%, said portion (5) having the screw tip, the two shank portions (3, 5) being welded together and at least the second shank portion (3, 5) being provided with a screwthread.

2. A screw according to claim 1, characterised in that at least the screw tip is constructed to be drilling and/or thread-cutting.

3. A screw according to claim 1 or 2, characterised in that the maraging steel contains approximately 12% Cr, 9% Ni, 4% Mo and 1% Ti.

4. A screw according to claim 3, characterised in that the maraging steel contains 0.004% C; 0.05% Si; 0.17% Mn; 0.002% S; 11.7% Cr; 9.1% Ni; 4.1% Mo; 2.0% Cu; 1.0% Ti.

5. A method of making a screw comprising the following steps:
a) Making a first screw shank from an austenitic stainless steel,
b) Making a second shank portion from a maraging stainless steel with a carbon content of less than 0.01%,
c) Welding the two shank portions,
d) Forming a screwthread on at least the second shank portion,
e) Hardening the second shank portion by precipitation.

6. A method according to claim 5, characterised by chamfering of the ends of the two shank portions for welding, in such manner that no projecting weld seam forms during welding.

7. A method according to claim 5 or 6, characterised in that the shank portions are connected by resistance pressure welding or by friction welding.

8. A method according to claim 6 or 7, characterised by forging a drilling tip on the second shank portion after the two shank portions have been welded.

9. A method according to any one of claims 6 to 8, characterised by rolling of the screwthread on the second shank portion.

10. A method according to any one of claims 6 to 9, characterised in that the precipitation hardening is carried out at a temperature of approximately 475°C after the thread forming operation.

## Revendications

1. Vis en acier inoxydable, à pointe dure, dont le fût a un premier tronçon (3), présentant la tête de vis, en acier austénitique, et un second tronçon (5), présentant la pointe de vis, en acier maraging, d'une teneur en carbone inférieure à 0,01%, les deux tronçons (3, 5) du fût étant soudés ensemble et au moins le second tronçon (3, 5) du fût présentant un filetage.

2. Vis selon la revendication 1, caractérisée par le fait qu'au moins la pointe de vis est conçue perceuse et/ou taraudeuse.

3. Vis selon l'une des revendications 1 ou 2, caractérisée par le fait que l'acier maraging contient environ 12% Cr, 9% Ni, 4% Mo et 1% Ti.

4. Vis selon la revendication 3, caractérisée par le fait que l'acier maraging contient: 0,004% C; 0,05% Si; 0,17% Mn; 0,002% S; 11,7% Cr; 9,1% Ni; 4,1% Mo; 2,0% Cu; 1,0% Ti.

5. Procédé de fabrication d'une vis comportant les étapes suivantes;
a) fabriquer un premier fût de vis en un acier inoxydable austénitique,
b) fabriquer un second tronçon du fût en un acier inoxydable maraging, d'une teneur en carbone de moins de 0,01%,
c) souder les deux tronçons de fût,
d) former un filetage sur au moins le second tronçon de fût,
e) durcir le second tronçon de fût par précipitation.

6. Procédé selon la revendication 5, caractérisé par un chanfreinage des extrémités à souder des deux tronçons de fût de façon qu'à la soudure n'apparaisse aucun cordon de soudure débordant.

7. Procédé selon la revendication 5 ou 6, caractérisé par le fait que les tronçons de fût sont réunis par soudage par résistance sous pression ou par soudage par friction.

8. Procédé selon la revendication 6 ou 7, caractérisé par le forgeage d'une pointe perceuse sur le second tronçon de fût après soudage des deux tronçons de fût.

9. Procédé selon l'une des revendications 6 à 8, caractérisé par le laminage du filetage sur le second tronçon de fût.

10. Procédé selon l'une des revendications 6 à 9, caractérisé par le fait que le durcissement par précipitation est effectué, après formage du filetage, à une température d'environ 475°C.
